# EUROPEAN PATENT SPECIFICATION

(11) **EP 4 532 870 B1**
(45) Date of publication and mention of the grant of the patent: **10.12.2025**
(21) Application number: 23729687.6
(22) Date of filing: 24.05.2023
(51) Int. Cl.: E04H 15/64, E04G 21/24

(54) **A TEMPORARY PROTECTIVE ROOF SYSTEM**
TEMPORÄRES SCHUTZDACHSYSTEM
SYSTÈME DE TOIT DE PROTECTION TEMPORAIRE

(30) Priority: 25.05.2022 SE 2250629
(43) Date of publication of application: 09.04.2025
(73) Proprietor: Pluseight Technology AB, 438 05 Hindas (SE)
(72) Inventor: WALLTHER, Harry, 438 54 Hindås (SE)
(74) Representative: Zacco Sweden AB
(86) International application number: PCT/EP2023/063971
(87) International publication number: WO 2023/227685

(56) References cited:
- EP-A2- 1 162 325
- US-A1- 2005 139 423
- US-A1- 2010 037 544

## Description

### TECHNICAL FIELD

The present disclosure relates to temporary protective roof system, in particular a keder roof system, as well as a method for assembling such a roof system. The temporary protective rood system is for example suitable for temporary installations, but may alternatively be used for buildings that are more permanent. The temporary protective roof system is for example suitable as weather protection.

Moreover, even if the temporary protective roof system according to the disclosure will be described primarily in relation to a roof, the temporary protective roof system is not restricted to this use, but may equally be used for other purposes, such as side wall, privacy protection, or the like.

### BACKGROUND

Temporary protective roof systems, such as keder roof systems, are known in the prior art. These known keder roof systems typically has specially designed roof support beams with integrated keder groove for enabling installation of a tarpaulin stretching between two neighbouring support beams.

A keder roof system comprises a sheet fabric or tarpaulin having a keder chord attached thereto a side edge of a fabric, and a keder groove may be provided in a support beam. Upon inserting the keder chord into the keder groove, a continuous sealed connection between fabric and support beam is accomplished. Keder is used in a variety of applications including both permanent & semi-permanent tents & structures.

It is known from for example patent publication US2005139423 to incorporate the keder grooves in a dedicated rail structure that is attached to a scaffold using a rail holder with clamping member.

This prior art keder roof design generally works well, but there is nevertheless a continuous demand for further improved performance, in particular in terms of cost-efficiency and simplified handling.

Patent publication US2010/0037544 A1 discloses another keder roof system comprising a rail holder with a single locking pin.

### SUMMARY

It is highly desirable to reduced time for assembly and disassembly of a temporary protective roof systems, as well as improving user-friendliness for the roof builders.

Furthermore, one particular problem with the prior art temporary protective roof systems is the difficulty to accomplish a proper angular positioning of the rail holder and clamp when mounting on a cylindrical support structure. If the rail holder is not correctly mounted, the entire rail structure carrying the tarpaulin will be slightly offset and/or inclined relative to the scaffold, thereby causing potential problems with subsequent mounting of a tarpaulin in an associated keder groove. The problem with an offset and/or inclined keder rail is that the lateral distance between neighbouring keder grooves may be too large or too small. A too large distance between neighbouring keder grooves renders mounting of the tarpaulin problematic or even impossible, and too small distance between neighbouring keder grooves results in undesirable pockets in the tarpaulin. Pockets are generally undesirable due to problems with water/ice/snow may be collected and suddenly released, or noise due to flapping tarpaulin. This problem is increased further when the keder rail is mounted offset from the underlying support structure, because then even a small angle error results in large lateral offset of the keder rail.

This problem is further enhanced due to unwanted movement of the clamp caused by the roof builder when applying torque to a clamping device, such as a threaded member.

In other words, incorrect angular assembly position of the rail holder occurs easily and results generally in less smooth installation of the tarpaulin, and correction of angular assembly position of the rail holder after final installation of the scaffold or roof beam requires time-consuming a potentially dangerous climbing of the roof builders.

There is thus a demand for a temporary protective roof system having further improved performance, in particular in terms of cost-efficient mounting and dismounting and simplified handling. An object of the present disclosure is to provide a temporary protective roof system where the previously mentioned problems are avoided. This object is at least partly achieved by the features of the independent claims. The dependent claims contain further developments of the temporary protective roof system.

According to a first aspect of the present disclosure, there is provided a temporary protective roof system comprising: a first roof support beam configured for providing main support and strength to a roof; a first tarpaulin; a first elongated rail structure having a tarpaulin attachment interface for attachment of the first tarpaulin to the first elongated rail structure and a rail holder for detachably fastening the first elongated rail structure to the first roof support beam; wherein the rail holder of the first elongated rail structure comprises at least two moveable locking pins for disconnectable engagement with the first roof support beam.

According to a second aspect of the present disclosure, there is provided a method for assembling a temporary protective roof system comprising: providing a first roof support beam; providing a first elongated rail structure having a tarpaulin attachment interface and a rail holder; detachably fastening the first elongated rail structure to the first roof support beam by engagement of at least two moveable locking pins of the rail holder with the first roof support beam; and assembling a first tarpaulin on the first elongated rail structure by attaching the tarpaulin to the tarpaulin attachment interface of the first elongated rail structure.

In this way, due to the presence of the at least two moveable locking pins in the rail holder that are configured for engaging with the first roof support beam, the correct angular position of the rail holder is easily, quickly and reliably obtained. Furthermore, the positive locking caused by the locking pin and corresponding locking structure in the roof support beam also ensures that the rail holder does not move or becomes inclined over time, for example due to large loads, thereby ensuring a reliable assembly position over time.

In addition, the moveable locking pin design also enables a simplified mounting of the rail holder on the roof support beam because operation of the locking pins may be performed manually, thereby rendering use of tools, such as a wrench or the like for a tensioning a prior art threaded clamp, obsolete. Tool-free assembly of the elongated rail is highly advantageous because it results in quicker and more convenient mounting and dismounting, as well as eliminates the risk that a roof builder drops of the tool at a potentially problematic position.

Further advantages are achieved by implementing one or several of the features of the dependent claims. For example, in some example embodiments, the tarpaulin attachment interface of the first elongated rail structure comprises a first keder groove, and the first tarpaulin has a rectangular form with first and second opposite side edges, the first tarpaulin has a first keder chord located along the first side edge and a second keder chord located along the second side edge, and the first keder chord is configured for being inserted into, and slidingly moveable within, the first keder groove of the first elongated rail structure. The keder design is attractive because it enables quick and flexible installation and removal of the tarpaulin from the roof support beam, and the tarpaulin may be reused may times before being discarded.

However, in some example embodiments, the tarpaulin attachment interface of the first elongated rail structure comprises an elongated nailing strip that is fastened on top side of the first elongated rail structure, wherein the first tarpaulin has a rectangular form with first and second opposite side edges, and wherein the first tarpaulin is configured for being nailed to the nailing strip. This type of tarpaulin attachment can be used with nearly all types of tarpaulins, thereby rendering the design flexible, but the tarpaulins are penetrated by nails or staples during assembly, thereby reducing the life-time of the tarpaulins. On the other hand, tarpaulins with less density and lower material thickness may be used.

In some example embodiments, that may be combined with any one or more of the above-described embodiments, the at least two moveable locking pins of the rail holder are arranged for disconnectable engagement with corresponding holes or recess in the first roof support beam. Holes, and sometimes also recesses, generally provides support to the locking pin in more directions, thereby providing a more well-defined and reliable locking position.

In some example embodiments, that may be combined with any one or more of the above-described embodiments, the at least two moveable locking pins are moveable between an engaged position, in which the locking pins are engaged with the first roof support beam for securing the rail holder to the first roof support beam, and a disengaged position, in which the locking pins are not engaged with the first roof support beam and the rail holder is removable from the first roof support beam.

In some example embodiments, that may be combined with any one or more of the above-described embodiments, the at least two moveable locking pins are spring-loaded towards the engaged position. This simplifies mounting of the rail holder on the roof support beam.

In some example embodiments, that may be combined with any one or more of the above-described embodiments, the at least two moveable locking pins are configured for engaging opposite sides of the first roof support beam. This provides a strong and reliable connection with the roof support beam.

In some example embodiments, that may be combined with any one or more of the above-described embodiments, the rail holder has a foot that is configured for being in contact with the first roof support beam, and wherein the at least two moveable locking pins are located in said foot. The foot enables increased stability of the connection between the rail holder and roof support beam.

In some example embodiments, that may be combined with any one or more of the above-described embodiments, at least one moveable locking pin, specifically each of at least two moveable locking pins, is coupled to a common or separate control arm for enabling motion control of the moveable locking pin between the engaged position and disengaged position by manually operating said control arm. A control arm enables for example manual operation of the locking pins, thereby providing simplified and more user-friendly handling during mounting and disassembly.

In some example embodiments, that may be combined with any one or more of the above-described embodiments, at least one moveable locking pin, specifically each of at least two moveable locking pins, can be selectively set and/or locked in the engaged position and disengaged position, by manually turning the control arm. Turning of a control arm is generally associated with user-friendly and safe handling of the locking pins.

In some example embodiments, that may be combined with any one or more of the above-described embodiments, the rail holder and the first roof support beam are configured for providing automatic attachment of the rail holder to the first roof support beam when the foot of the rail holder is pushed towards the first roof support beam. This provides further improved user-friendliness for mounting of the temporary protective roof.

In some example embodiments, that may be combined with any one or more of the above-described embodiments, at least a front region of said at least two locking pins has a conical or tapered shape over a portion of a total length of the locking pin, such that a conical or tapered front region of the locking pins is configured to interact with the first roof support beam in the engaged position of the moveable locking pins. A conical locking pin enables elimination of play, thereby further improving the connection between rail holder and roof support beam.

In some example embodiments, that may be combined with any one or more of the above-described embodiments, at least a portion of the at least two locking pins has a cylindrical shape with a diameter in the range of 4 - 25 mm. Too small locking pins does not provide sufficient safety and too large locking pins results in increased cost and reduced load capacity of roof support beam due to large locking holes.

In some example embodiments, that may be combined with any one or more of the above-described embodiments, a contact surface of the first roof support beam configured to receive the foot of the rail holder is rounded or inclined, such that the locking pins are configured to be automatically pushed back against the force of a spring device when the foot is pushed towards the first roof support beam and the locking pins start engaging an exterior surface of the first roof support beam, and such that the locking pins are configured to automatically move forwards towards the first roof support beam when the foot with the locking pins reaches the final position. This provides further improved user-friendliness for mounting of the temporary protective roof.

In some example embodiments, that may be combined with any one or more of the above-described embodiments, the foot has a contact surface configured to be in contact with the first roof support beam when the foot has reached the final position, and wherein the contact surface of the foot is located spaced apart from the keder groove with a distance of at least 10 cm, specifically at least 25 cm, and more specifically within a range of 10 - 150 cm. This reduces the risk of damage and wear due to contact between tarpaulin and brazing elements of the finished keder roof.

In some example embodiments, that may be combined with any one or more of the above-described embodiments, the rail holder with the at least two spring-loaded locking pins is arranged with snap-fit functionality. This provides further improved user-friendliness for mounting of the temporary protective roof.

In some example embodiments, that may be combined with any one or more of the above-described embodiments, the first roof support beam is a lattice girder having has a top chord, a bottom chord, and a plurality of interconnecting elements fastened to the top and bottom chords and arranged for transmitting loads between the top and bottom chords. A lattice girder is a cost-efficient and light-weight design for a roof support beam, and the top and bottom chords provide good interface for the connection with the rail holder.

In some example embodiments, that may be combined with any one or more of the above-described embodiments, the first roof support beam is a lattice girder having has a top chord, a bottom chord, and a plurality of interconnecting elements fastened to the top and bottom chords and arranged for transmitting loads between the top and bottom chords, and wherein a central axis of each locking hole is oriented substantially perpendicular to a plane defined by the interconnecting elements. This provides a good distribution of contact points for the rail holder on the top/bottom chord.

In some example embodiments, that may be combined with any one or more of the above-described embodiments, each of the top and bottom chords are made of hollow cylindrical tubes. A lattice girder is a cost-efficient and light-weight design for a roof support beam.

In some example embodiments, that may be combined with any one or more of the above-described embodiments, the rail holder comprises an elongated beam having first and second ends, wherein the first end of the beam is provided with a rail attachment interface configured for enabling rigid connection with the first elongated rail structure, and wherein the second end of the beam is provided with the foot for enabling detachable connection with the first roof support beam. The elongated beam is a cost-efficient design for accomplishing a desired vertical distance between tarpaulin and brazing elements.

In some example embodiments, that may be combined with any one or more of the above-described embodiments, the foot has a load carrying portion with a contact surface configured for abutting and transmitting a load to the upper chord of the first roof support beam when the foot is installed on the first roof support beam, and wherein the foot further has first and second rigid side portions configured for extending partly over the sides of the upper chord and for holding the locking pins. This provides a good distribution of contact points for the rail holder on the top/bottom chord.

In some example embodiments, that may be combined with any one or more of the above-described embodiments, the load carrying portion of the foot is made of sheet metal that has been bent to have a U-shape, wherein the elongated beam of the rail holder is attached to an outer side of the bottom portion of the U-shaped sheet-metal part, and the contact surface is defined by the end edges of the lateral sides of the U-shaped sheet-metal part, and wherein said lateral sides are offset from each other with of a distance of 40 - 250 mm. This enables a cost-efficient, stable and rigid connection between rail holder and roof support structure.

In some example embodiments, that may be combined with any one or more of the above-described embodiments, the first elongated rail structure is detachably fastened to the first roof support beam by means of a plurality of individual rail holders, in particular at least six individual rail holders, that are located spaced apart along the length of the first elongated rail structure.

In some example embodiments, that may be combined with any one or more of the above-described embodiments, the foot comprises a brazing element attachment interface on each side of the foot for enabling attachment of a structural brazing element to the foot. This further improves the modularity of the temporary protective roof system, and allows the roof builder to adjust the roof strength depending on size and other circumstances.

In some example embodiments, that may be combined with any one or more of the above-described embodiments, the brazing element attachment interface of each foot further comprises a flat support surface on each side of the foot for engagement with brazing elements, thereby providing increased stability improved steering for the brazing elements of the finished roof support structure upon assembly of the brazing elements on the foot.

In some example embodiments, that may be combined with any one or more of the above-described embodiments, the first elongated rail structure is composed of a plurality of elongated rail sections connected end to end to jointly form the first elongated rail structure, and wherein at least one elongated rail section of the first elongated rail structure comprises a rail holder, in particular two, three or four rail holders, for detachably fastening the elongated rail section to a first roof support beam, in particular on a vertical upper or lower side of the first roof support beam. The provides a highly modular temporary protective roof system.

In some example embodiments, that may be combined with any one or more of the above-described embodiments, the temporary protective roof system further comprises: a second roof support beam configured for providing main support and strength to a roof; a second elongated rail structure having a tarpaulin attachment interface and a rail holder for detachably fastening the second elongated rail structure to the second roof support beam; wherein the first and second roof support beams are configured for being located spaced apart side by side and interconnected by means of brazing elements and/or ledgers for defining a rigid roof bay; wherein the rail holder of the second elongated rail structure comprises at least two moveable locking pins for disconnectable engagement with the second roof support beam.

In some example embodiments, that may be combined with any one or more of the above-described embodiments, the tarpaulin attachment interface of the second elongated rail structure comprises a first keder groove, wherein the second keder chord of the first tarpaulin is configured for being inserted into, and slidingly moveable within, the first keder groove of the second elongated rail structure.

In other example embodiments, the tarpaulin attachment interface of the second elongated rail structure comprises an elongated nailing strip that is fastened on top side of the second elongated rail structure, and wherein the first tarpaulin is configured for being nailed to the nailing strip of the second elongated rail structure.

Further features and advantages of the invention will become apparent when studying the appended claims and the following description. The skilled person in the art realizes that different features of the present disclosure may be combined to create embodiments other than those explicitly described hereinabove and below, without departing from the scope of the present disclosure.

### BRIEF DESCRIPTION OF DRAWINGS

The temporary protective roof system and corresponding method according to the disclosure will be described in detail in the following, with reference to the attached drawings, in which
- Fig. 1A: shows schematically a view of the roof support structure,
- Fig. 1B: shows a close-up view of a part of figure 1A,
- Fig. 2: shows schematically a view of the roof support structure having tarpaulins mounted thereon,
- Fig. 3A: shows schematically a side-view of the roof support structure,
- Fig. 3B-C: show close-up views of parts of figure 3A,
- Fig. 4: shows details of the curved section of the elongated rail structure
- Fig. 5: shows two tarpaulins mounted on a common elongated rail structure,
- Fig. 6: show one way of mounting a keder roof system,
- Fig. 7: show a tarpaulin with attached pull ropes,
- Fig. 8A-D: show an example embodiment of how to mount a keder roof system,
- Fig. 9: shows mounting of a rail holder on an underlying roof support beam,
- Fig. 10A-C: show one example embodiment of rail holder,
- Fig. 11A-C: show a further example embodiment of rail holder,
- Fig. 12A-B: show a perspective view and a side view of an example embodiment of the locking pin,
- Fig. 13A-B: show a perspective view of the top chord and a cross-sectional view of the foot engaged with the chord, according to an example embodiment of the temporary protective roof system,
- Fig. 14: shows a cross-sectional view of the foot engaged with the chord, according to an example embodiment of the temporary protective roof system,
- Fig. 15A-B: show a perspective view of the top chord and a cross-sectional view of the foot engaged with the chord, according to an example embodiment of the temporary protective roof system,
- Fig. 16: show an alternative example embodiment of the tarpaulin attachment interface,
- Fig. 17A-B: show the modular design of the keder roof system,
- Fig. 18A-B: show assembly of a lattice guard rail on neighbouring roof support beams, and
- Fig. 19-20: show the basic steps of two methods of mounting a keder roof system.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

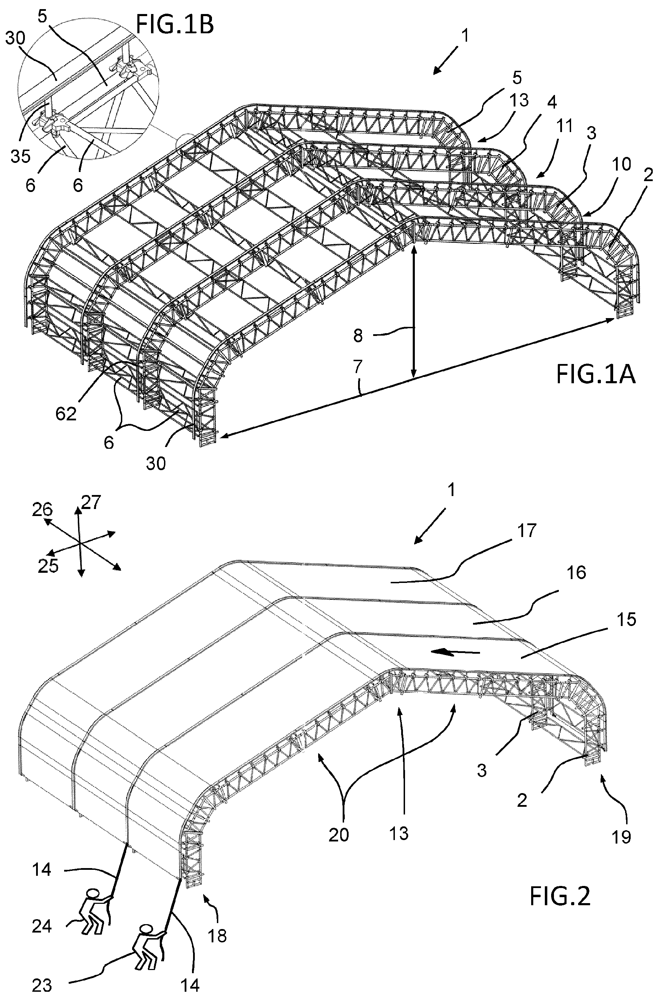

Figure 1A and 2 schematically show a perspective overview of the temporary protective roof system according to the present disclosure in form of a keder roof system, wherein figure 1A shows an assembled roof support structure 1 before mounting of the a set of tarpaulins, and figure 2 shows the assembled roof support structure 1 after mounting of the set of tarpaulins. The assembled and installed keder roof system may be deemed having an extension in a roof width direction 25, a roof length direction 26 that is perpendicular to the roof width direction 25, and a roof height direction 27 that is perpendicular to both the roof width and roof length directions 25, 26.

In the example embodiment of figures 1A and figure 2, the assembled roof support structure 1 of figure 1A comprises four roof support beams 2-5 arranged spaced apart side by side in the roof length direction 26, namely a first 2, a second 3, a third 4 and a fourth 5 roof support beam, wherein neighbouring roof support beams 2-5 are mutually structurally connected via brazing elements and/or ledgers 6 for defining a rigid framework the forms the roof support structure 1. Figure 1B shows a closed-up view of a portion of the roof support structure 1 in the region of the fourth roof support beam 5.

One of the primary purposes of the roof support structure 1 is to bridge a space above a room and to carry and hold the tarpaulins at a desired position, and being capable of withstanding loads transferred to the roof support structure 1 from the tarpaulins and caused by for example winds, snow loads, etc.

The finished temporary protective roof system of figure 2 comprises a roof ridge region 13, and first eave region 18 and a second eave region 19. The portion of the roof located between the roof ridge region 13 and the first or second eave region 18, 19 may be referred to as an intermediate region 20.

Neighbouring roof support beams 2-5, such as for example the first and second roof support beams 2, 3 jointly define a roof bay 10. Hence, the roof structure of figure 2 comprises three roof bay regions 10, 11, 12.

In the example embodiment of figure 2, a first tarpaulin 15 is being mounted to cover the first roof bay region 10 by means of first and second roof builders 23, 24, who cooperate for jointly pulling and mounting the first tarpaulin 15 on the roof support structure using two pull ropes 14. A second tarpaulin 16 has been mounted to cover the second roof bay region 11, and a third tarpaulin 17 has been mounted to cover the third roof bay region 12.

In the example embodiment of figure 2, the roof is a gambrel-type roof, but the keder rood system is equally useful for other types of roof designs, such as flat roof, leaning roofs, gable-type roofs, etc.

The roof has a modular structure, because the roof support structure 1 is made of a plurality of parts that are temporarily connected. For example, each of the roof support beams 2-5 may be composed of a plurality of straight and/or curved roof support beam units that are interconnected using for example clamping connection or positive locking. Similarly, the brazing elements and/or ledgers 6 are also separate parts that are temporarily connected to the roof support beams.

Consequently, depending on the construction of the modular framework, the roof free span width 7 and roof height 8 of the final roof may vary a lot. For example, the roof free span width 7 may be in the range of 5 - 50 metres, or more, and roof height, as measured from the vertical support surface at the first or second eave to the roof ridge, may be in the range of 0-30 metres, or more.

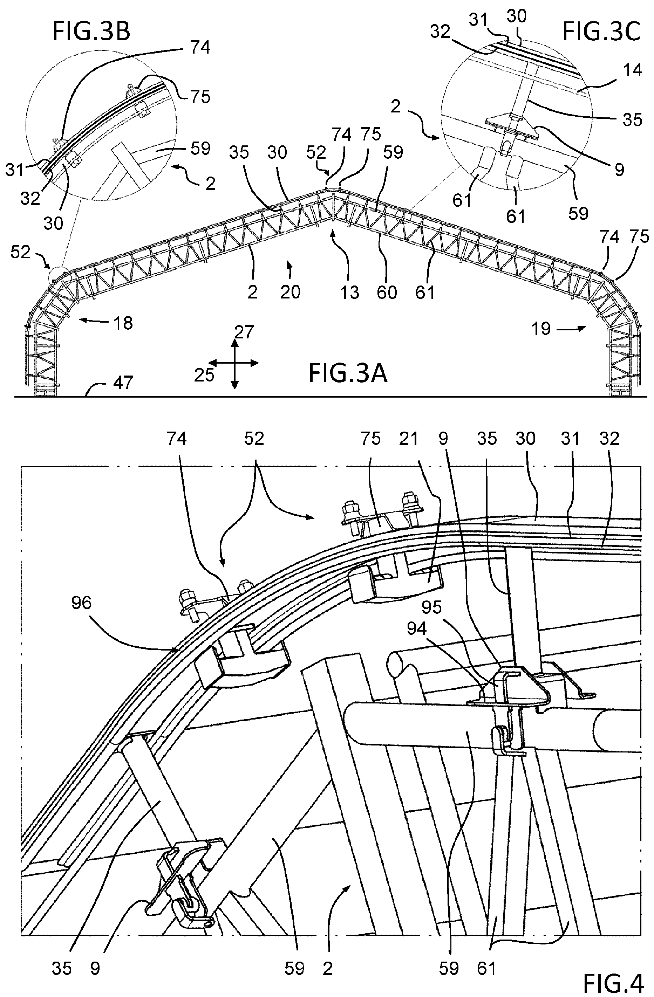

Figure 3A schematically shows a side view of for example the first roof support beam 2 of figure 1A, wherein figure 3B shows a close-up side view of a curved portion of the first roof support beam 2, and figure 3C show a close-up side view of a straight portion of the first roof support beam 2. The roof support beam 2 of figure 3A is standing on a support surface 47.

Figure 4 shows a perspective overview of for example the first roof support beam 2 in a curved portion thereof.

The roof support beams 2-5 may have various structure, composition and design. One particularly attractive design of the roof support beam 2-5 is in form of a lattice beam, lattice girder or truss beam, due to their high structural strength combined with low weigh. Such lattice girder or truss beams may be manufactured using steel, aluminium, or other types of metal. A lattice girder or truss beam, sometimes also referred to as an open web girder, typically comprises a top chord 59, a bottom chord 60 and a plurality of relatively straight structural elements 61 interconnecting the top and bottom chord and forming an essentially triangulated system.

With reference to figure 3A-3C and figure 4, according to some example embodiments, the first roof support beam 2 carries a detachable first elongated rail structure 30 that has a tarpaulin attachment interface 96 for attachment of the first tarpaulin 15 to the first elongated rail structure 30. This design further increases the modular design of the temporary protective roof system because the roof support beam 2 may be any type of roof support beam, and not necessarily a dedicated roof support beam having integrated tarpaulin attachment interface. Consequently, the scaffolding and/or protective roof system supplier can use an already available roof support beam as load carrying member, or nearly any type of roof support beam, thereby reducing cost and complexity for increasing scope of service to include temporary protective roof systems.

In particular, by providing the roof support beam 2 in form of a lattice beam having top and bottom chords 59, 60 made from steel tubes with 48.3 mm outer diameter, according the European Standard EN 12810-1 for scaffolds products, the lattice beam is compatible for use as a scaffold part, i.e. for building façade scaffolds or the like. The centre to centre distance of the top and bottom chords 59, 60 of the lattice beam may for example be 500 mm for further improved compatibility with other parts of a scaffold system.

In addition, if for example the tarpaulin attachment interface 96 of the first elongated rail structure 30 becomes damaged, it is not necessary to replace the entire roof support beam, but replacement of the first elongated rail structure 30 is sufficient.

Since the detachable first elongated rail structure 30 is carried by the rigid and load supporting first roof support beam 2, the first elongated rail structure 30 may be designed without any substantial requirement in terms of load capacity. In other words, the first elongated rail structure 30 may be designed with relatively low rigidity for saving weight and cost.

According to the example embodiments of at least figures 3A-8D, the tarpaulin attachment interface 96 for attachment of the first tarpaulin 15 to the first elongated rail structure 30 may be implemented in form of at least a first keder groove 31.

The first keder groove 31 may be integrally formed in the first elongated rail structure 30, for example by manufacturing the first elongated rail structure 30 as a cost-efficient aluminium profile in an aluminium extrusion process, or as a cost-efficient polymeric material profile in a polymeric material extrusion process.

The first elongated rail structure 30 may be made in one piece or composed of a plurality of parts and/or materials.

The first keder groove 31 clearly extends in parallel with the direction of elongation of the first rail structure 30.

According to some example embodiments, the first elongated rail structure 30 comprises a plurality of individual and distributed rail holders 35 for detachably fastening the first elongated rail structure 30 to the first roof support beam 2. The rail holder 35 may for example be fastened to, or integrally formed within, the first elongated rail structure 30, and configured for enabling quick and secure temporary attachment of the first elongated rail structure 30 to the first roof support beam 2 by a roof builder 23, 24.

With reference to figure 4, this quick and secure temporary attachment of the first elongated rail structure 30 to the first roof support beam 2 may be accomplished by providing each of the rail holders 35 of the first elongated rail structure 30 with two moveable locking pins for disconnectable engagement with corresponding holes in the top chord 59 of the first roof support beam 2.

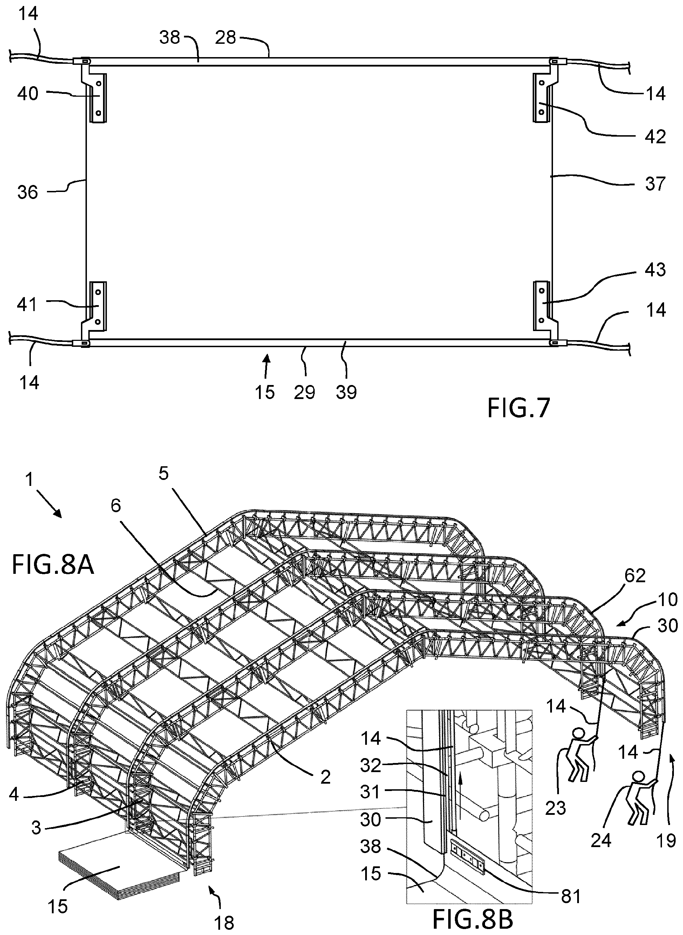

Figure 7 schematically shows a top view of a tarpaulin, such as the first tarpaulin 15, including first, second, third and fourth shuttle arrangements 40, 41, 42, 43, each installed in a separate corner of the first tarpaulin 15. Figure 7 further shows four pull ropes 14, one connected to each of first to fourth shuttle arrangements 40-43.

With reference to figures 2 and 7, the first tarpaulin 15 may have a rectangular form with first and second opposite side edges 28, 29, and third and fourth opposite side edges 36, 37, wherein the first tarpaulin has a first keder chord 38 located along the first side edge 28 and second keder chord 39 located along the second side edge 29.

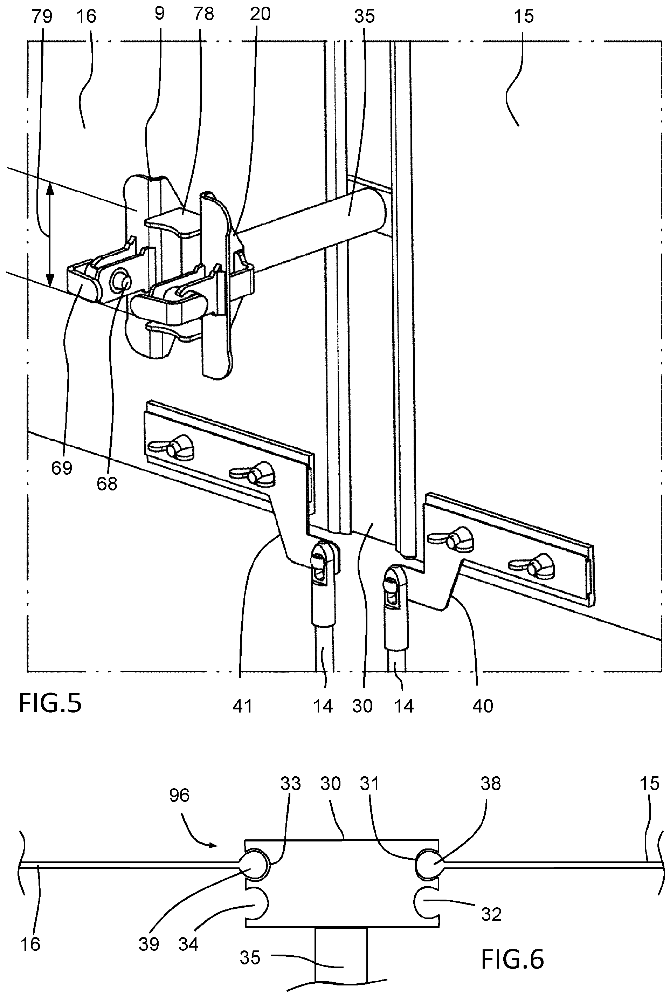

Figure 5 schematically shows a perspective view of first and second tarpaulins 15, 16 in assembled state together with the first elongated rail structure 30, wherein a first shuttle arrangement 40 is attached to the first tarpaulin 15 and connected to a pull rope 14, and wherein a second shuttle arrangement 41 is attached to a neighbouring second tarpaulin 16 and connected to a pull rope 14. Figure 5 also shows a rail holder 35 with associated rail holder foot 9 that is designed for detachable fastening on a first roof support beam 2.

With reference to figure 5, upon mounting of the first tarpaulin 15 on the first elongated rail structure 30, the first keder chord 38 of the first tarpaulin should more or less be completely slidingly inserted into the first keder groove 31 of the first elongated rail structure 30, for providing a strong and sealed connected between the first side edge 28 of the first tarpaulin and the first elongated rail structure 30.

The mounting of the first tarpaulin 15 on the first elongated rail structure 30 is for example performed by a roof builder inserting an end of the first keder chord 38 of the first tarpaulin 15 into an end of the first keder groove 31 of the first elongated rail structure 30. This may for example be performed manually. Thereafter, a pulling force is exerted on the first tarpaulin 15 for sliding the first keder chord 38 into the first keder groove 31 until a desired position is attained. The pulling force is for example exerted on the first tarpaulin 15 via the pull rope 14 of the first shuttle arrangement 40.

Figure 6 shows an example of a sectional view through an example embodiment of the first elongated rail structure 30 having a first tarpaulin 15 mounted in a first keder groove 31 of the first elongated rail structure 30, and a second tarpaulin 16 mounted in a third keder groove 33 of the first elongated rail structure 30.

The first elongated rail structure 30 is not limited to this specific design, and may alternatively have two keder grooves or six keder grooves, or the like.

The basic steps for mounting single-tarpaulin installation are schematically illustrated in figures 8A-D. With reference to figure 8A, before starting mounting of the first tarpaulin 15, the roof support structure 1 with its roof support beams 2-5 and brazing elements 6 is mounted. This may for example be performed by first building roof bays at a convenient location, such as on the ground next to the desired final position, and subsequently lifting the finished roof bays to the desired final position using a crane or the like, and finally connecting the roof bays using brazing elements. A roof bay refers to two roof support beams interconnected by brazing elements to form a rigid entity. Alternatively, single roof support beams may be assembled and subsequently lifter to the desired final position and thereafter connected with neighbouring roof support beams using brazing elements 6.

All required pull ropes are installed in the rope guiding structure 52 in connection with building the roof segments on the ground and before lifting, because pre-installed pull ropes 14 enables avoiding unnecessary climbing on the assembled roof support structure 1.

Mounting, lifting and installing the roof support structure 1 with its roof support beams 2-5 and brazing elements 6 is simplified when the tarpaulins are not yet installed because the wind-sensitivity is reduced, and climbing on the roof support structure for connecting neighbouring roof support beams is simpler before mounting the tarpaulins 15, 16.

With reference to figure 8B, when the roof support structure 1 with its roof support beams 2-5 and brazing elements 6 is completed, mounting of the first tarpaulin 15 may begin. This may be performed by first placing the first tarpaulin 15 at a location close to for example the first eave region 18, and inserting an end of the first and second keder chord 38, 39 of the first tarpaulin 15 in appropriate keder grooves 31-34 of the first and second elongated rail structures 30, 62, and connecting the pre-installed pull ropes 14 with first and second shuttle arrangements 40, 41. Note that the second shuttle arrangement 41 is not visible in figure 8B because it is located on the backside of the first tarpaulin 15.

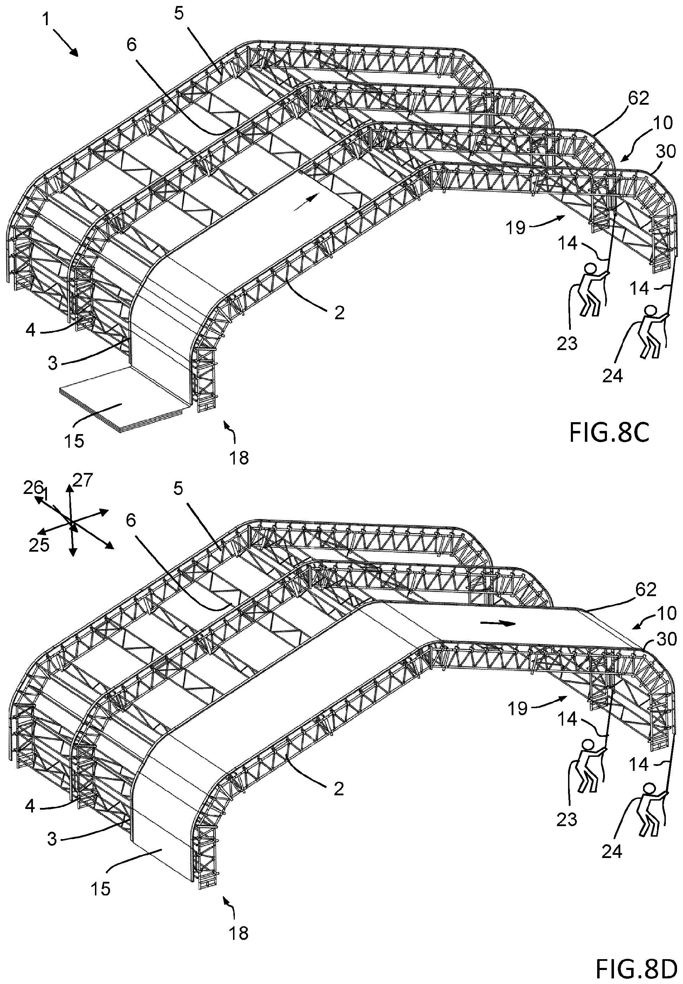

Thereafter, with reference to figures 8C and 8D, roof builders 23, 24 located at the second eave region 19 may manually pull the pull ropes 14 connected with the first and second shuttle arrangements 40, 41 for mounting the first tarpaulin 15 until it covers the entire first roof bay region 10, as shown in figure 8D.

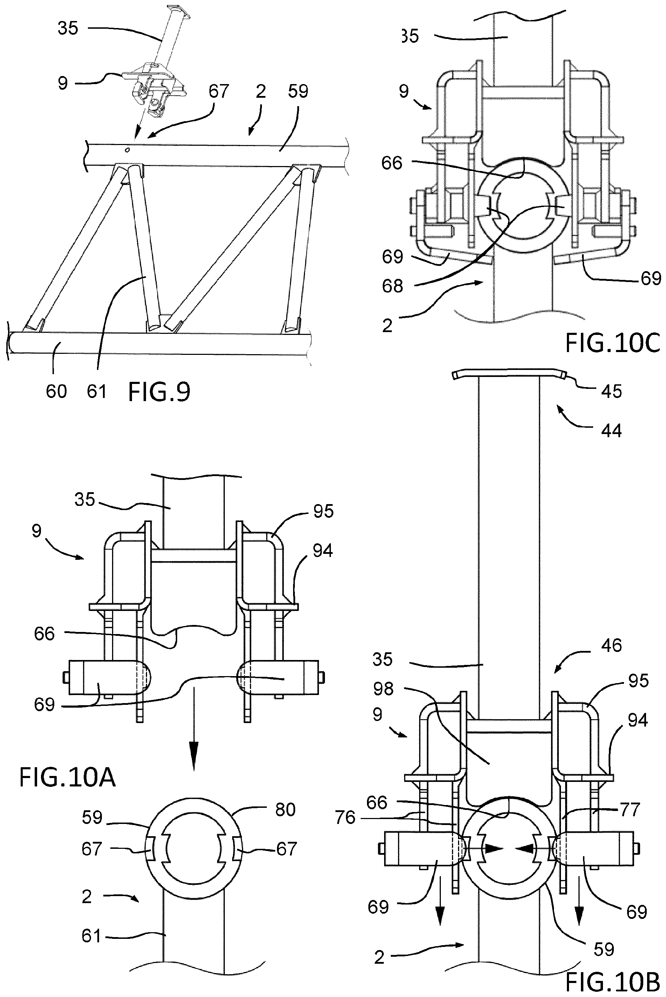

Figures 9 and 10A-C show schematically an example embodiment of a foot 9 of a rail holder 35, wherein figure 9 shows a perspective view of the rail holder 35 with foot 9 when approaching the first roof support beam 2 that has two locking holes 67 or recesses, figure 10A shows a side-view of the same position, figure 10B shows the foot 9 after a contact surface 66 of the foot 9 has arrived in contact with an exterior surface of the first roof support beam 2 but before two locking pins 68 of the foot 9 have been inserted into the associated locking holes 67 or recesses of the first roof support beam 2, and figure 10C shows the foot 9 after the locking pins 68 of the foot 9 have been inserted into the associated locking holes 67 or recesses of the first roof support beam 2.

Consequently, in some example embodiments, the first roof support beam 2 is a lattice girder having has a top chord 59, a bottom chord 60, and a plurality of interconnecting elements 61 fastened to the top and bottom chords and arranged for transmitting loads between the top and bottom chords, and wherein the locking holes 67 are provided in the top and/or bottom chords 59, 60.

Furthermore, in some example embodiments, a central axis of each locking hole 67 is oriented substantially perpendicular to a plane defined by the interconnecting elements 61, i.e. not deviating more than 25 degrees from a plane that is perpendicular to a plane defined by the interconnecting elements 61.

Each of the top and bottom chords are may for example be made of hollow cylindrical tubes, thereby enabling drilling or stamping of highly accurate locking holes 67 with low level of tolerances.

The rail holder 35 thus has a foot 9 that is configured for being in contact with the first roof support beam 2, and the two moveable locking pins 68 are located in said foot 9.

In the example embodiment of figures 9 and 10A-C, the locking pins 68 are spring-loaded towards the locked and engaged position showed in figure 10C, but the locking pins 68 may be selectively set in a stable open and closed state by pulling the control arms 69 outwards for removing the locking pins 68 from the locking holes 67, and subsequently turning the two control arms 69 for setting the locking pins 68 in a stable disengaged position.

Alternatively, for additional safety, the locking pins 68 may be secured in the engaged position by means of a final turning motion of the control arms in engaged position. In such case, the locking pins 68 may be shifted from an engaged state to a stable disengaged state by first turning the two control arms 69, for example 90 degrees, pulling the control arms 69 outwards against the spring force of the spring-loading springs for removing the locking pins 68 from the locking holes 67, and subsequently turning the two control arms 69, for example 90 degrees, for setting the locking pins 68 in a stable disengaged position.

Each of the two moveable locking pins 68 is thus coupled to a common or separate control arm 69 for enabling motion control of the moveable locking pin between the engaged position and disengaged position by manually operating said control arm 69.

Moreover, each of at least two moveable locking pins 68, can be selectively set and/or locked in the engaged position and disengaged position, by manually turning the control arm 69.

The two moveable locking pins 68 are thus moveable between an engaged position, in which the locking pins are engaged within the holes 67 in the first roof support beam 2 for securing the rail holder to the first roof support beam 2, and a disengaged position, in which the locking pins are not engaged within the holes 67 and the rail holder is removable from the first roof support beam 2.

The moveable locking pins 68 are moveable in a direction towards and away from the first roof support beam 2 when shifting between the disengaged/engaged positions. In particular, the moveable locking pins 68 may be linearly moveable in a plane located in the range of +/- 30 degrees from a direction perpendicular to the first roof support beam 2. When the locking pins has an elongated or cylindrical shape, each moveable locking pin may be moveable in a direction of elongation, or in an axial direction, of said locking pin 68.

The two moveable locking pins 68 are configured for engaging opposite sides of the first roof support beam 2. Furthermore, the two moveable locking pins 68 may be arranged substantially aligned with each other, or at least not diverging more than 30 degrees from each other.

In the example embodiment of figure 10B the rail holder 35 comprises an elongated beam having first and second ends 44, 46, wherein the first end 44 of the beam is provided with a rail attachment interface 45 configured for enabling rigid connection with the first elongated rail structure 30, and wherein the second end 46 of the beam is provided with the foot 9 for enabling detachable connection with the first roof support beam 2.

The foot 9 has a load carrying portion 20 with a contact surface 66 configured for abutting and transmitting a load to the upper chord 59 of the first roof support beam 2 when the foot 9 is installed on the first roof support beam 2, and wherein the foot 9 further has first and second rigid side portions 76, 77 configured for extending partly over the sides of the upper chord 59 and for holding the locking pins 68.

With reference to for example figure 5, the load carrying portion of the foot 9 is made of sheet metal that has been bent to have a U-shape 78, wherein the elongated beam of the rail holder 35 is attached to an outer side of the bottom portion of the U-shaped sheet-metal part 78, and the contact surface is defined by the end edges of the lateral sides of the U-shaped sheet-metal part 78, and wherein said lateral sides are offset from each other with of a distance 79 of 40 - 250 mm.

The locking pins 68 may have a slightly conical shape, such that at least the conical part of each locking pin 68 may interact with the locking hole or recess 67 for ensuring improved stability and eliminated play.

The reliable and accurate angular positioning of the foot 9 on the first roof support beam 2 provided by the play-free engagement of the locking pins 68 with the locking holes 67 ensures that neighbouring rail holders 35, in the roof length direction 26, are mounted in parallel with each other. As a result, a distance between keder groves of neighbouring first and second elongated rail structures 30, 62 may be nearly constant, or at least within relatively tight tolerances, over the length of the first and second elongated rail structures 30, 62, such that the tarpaulins 15-17 are more easily mounted and dismounted within said keder grooves.

Others said, when neighbouring rail holders 35 are not mounted in parallel with each other, i.e. slightly inclined with respect to each other, the distance between keder groves of neighbouring first and second elongated rail structures 30, 62 is either too small or too large, thereby rendering mounting/dismounting of the tarpaulins more difficult.

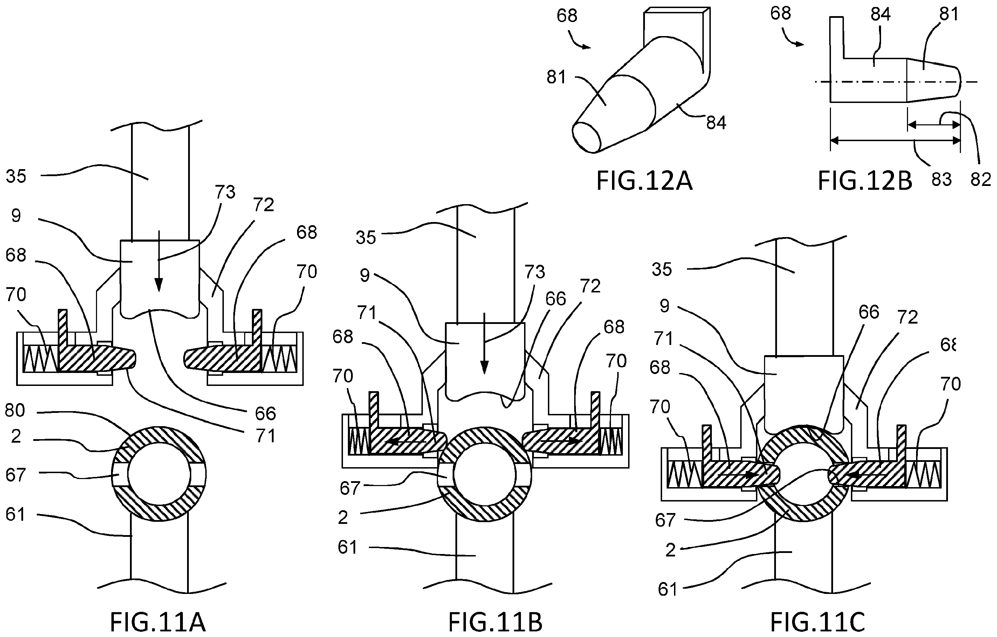

A further example embodiment of the foot 9 is described below with reference to schematically illustrated figures 11A-C, which shows a foot 9 with two-spring loaded locking pins 68 arranged with snap-fit functionality. In other words, the locking pins 68 are by default always urged forwards towards an inwards protruding position by means of mechanical spring devices 70, as showed in figure 11A.

Upon pushing the foot towards the roof support beam 2, as depicted by foot motion arrow 73, the locking pins 68 are temporarily automatically retracted to the retracted position. Specifically, the pushing causes the locking pins 68 to automatically become temporarily retracted due to contact with the external rounded surface 80 of the roof support beam 2, as shown in figure 11B.

Upon further motion of the foot 9 towards the roof support beam 2, the contact surface 66 of the foot 9 comes into contact with the roof support beam 2 and the locking pins 68 may pushed into the locking hole 67 by the mechanical spring devices 70, such that the foot 9 and rail holder 35 becomes firmly and reliably connected to the roof support beam 2, as showed in figure 11C.

In other words, in some example embodiments, the rail holder 35 and the first roof support beam 2 are configured for providing automatic attachment of the rail holder 35 to the first roof support beam 2 when the foot 9 of the rail holder 35 is pushed towards the first roof support beam 2.

Moreover, a contact surface 80 of the first roof support beam 2 configured to receive the foot of the rail holder 35 is rounded or inclined, such that the locking pins 68 are configured to be automatically pushed back against the force of a spring device when the foot 9 is pushed towards the first roof support beam 2 and the locking pins 68 start engaging an exterior surface 80 of the first roof support beam 2, and such that the locking pins 68 are configured to automatically move forwards into the locking holes 67 of the first roof support beam 2 when the foot with the locking pins 68 reaches the final position.

With reference to in particular figures 11A-C, the front end 71 of the locking pins 68 may have a slightly conical shape for ensuring improved stability and eliminated play.

Figure 12A schematically shows a perspective view of an example embodiment of the locking pin 68 and figure 12B schematically shows a side view of said locking pin 68.

A front region 81 of said two locking pins 68 may have a conical or tapered shape over a portion 82, such as for example at least 3 mm, of a total length 83 of the locking pin 68, such that a conical or tapered front region 81 of the locking pin 68 is configured to interact with the locking hole or recess 67.

Furthermore, a cylindrical portion 84 of the locking pins 68 may have a diameter in the range of 4 - 25 mm.

The locking pins have been primarily described herein as being mainly cylindrical, but the locking pins 68 may have other cross-sectional shapes.

The foot 9 of the rail holder 35 may in some example embodiments comprise at least two spring-loaded locking pins 68 for detachable engagement with corresponding holes 67 located in the first roof support beam 2, for safely and reliably connecting the rail holder 35 and associated first elongated rail structure 30 to the first roof support beam 2.

The snap-fit foot 9 of figures 11A-C is subsequently removed by for example manually pushing the two spring-loaded locking pins 68 backwards and simultaneously lifting the foot and rail holder away from the support beam 2.

Consequently, with reference to figures 1A - 12B, the present disclosure relates to a keder roof system comprising: a first roof support beam 2 configured for providing main support and strength to a roof, a first elongated rail structure 30 having a first keder groove 31 and a rail holder 35 for detachably fastening the first elongated rail structure 30 to the first roof support beam 2, a first tarpaulin 15 having a rectangular form with first and second opposite side edges, wherein the first tarpaulin 15 has a first keder chord 38 located along the first side edge and a second keder chord 39 located along the second side edge, and wherein the first keder chord 38 is configured for being inserted into, and slidingly moveable within, the first keder groove 31 of the first elongated rail structure 30, wherein the rail holder 35 of the first elongated rail structure 30 comprises at least two moveable locking pins 68 for disconnectable engagement with corresponding holes 67 in the first roof support beam 2.

Again with reference to figures 1A - 12B, the keder roof system further comprises: a second roof support beam 3 configured for providing main support and strength to a roof; a second elongated rail structure 62 having a first keder groove 31 and a rail holder 35 for detachably fastening the second elongated rail structure 62 to the second roof support beam 3; wherein the first and second roof support beams 2, 3 are configured for being located spaced apart side by side and interconnected by means of brazing elements and/or ledgers 6 for defining a rigid roof bay; wherein the second keder chord 39 of the first tarpaulin 15 is configured for being inserted into, and slidingly moveable within, the first keder groove 31 of the second elongated rail structure 62; and wherein the rail holder 35 of the second elongated rail structure 62 comprises at least two moveable locking pins 68 for disconnectable engagement with corresponding holes 67 in the second roof support beam 2.

The above-described embodiments include two moveable locking pins 68 of the rail holder 35 engaging within corresponding locking holes 67 of the top or bottom chord 59, 60. However, the two moveable locking pins 68 may alternatively engage other parts of the first roof support beam 2, while still providing an acceptable coupling strength and stability between the rail holder 35 and first roof support beam 2.

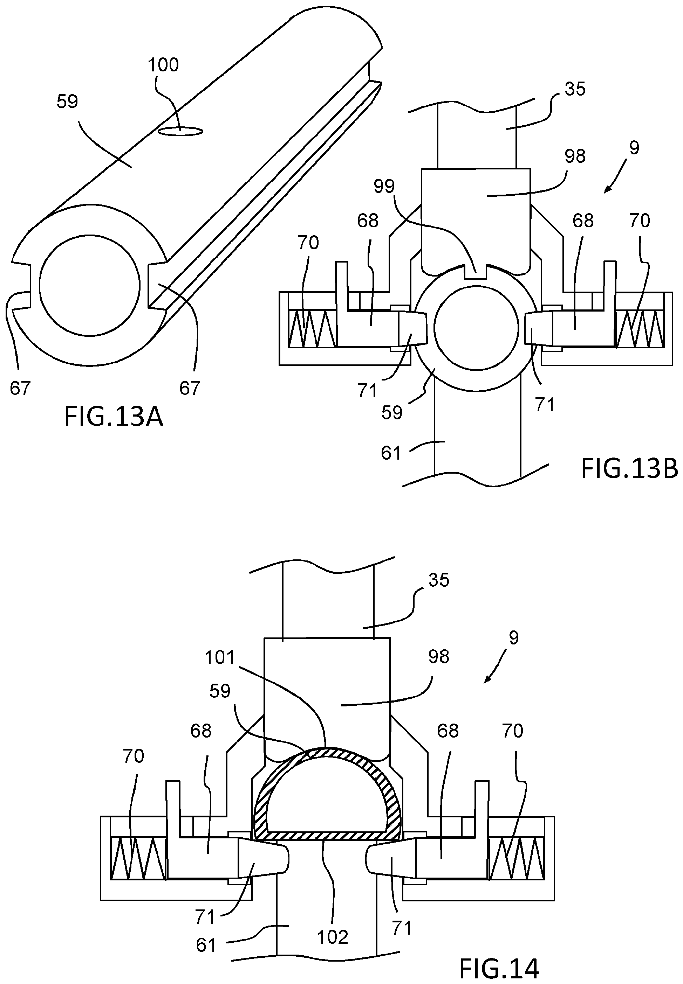

For example, with reference to figures 13A and 13B, the top and/or bottom chord 59, 60 may have at least two elongated recesses 67 that extends over the entire length of the chord 59, 60, or over a portion of the length of the chord. The recesses 67 may for example be arranged on substantially opposite side of the top and/or bottom chord 59, 60. Figure 13A shows a perspective view of the top chord 59 and figure 13B shows a cross-sectional view showing the foot 9 in engaged state with the top chord 59.

Specifically, figure 13B shows the at least two moveable spring-loaded locking pins 68 being engagement within the two elongated recess 67 of the first roof support beam 2.

In those embodiments where the attachment location of the rail holder 35 on the roof support beam 2 is not critical, the embodiment of figures 13A-13B provides increased flexibility, because the rail holder 35 may be disconnectably engaged at any position along the length of the roof support beam 2.

However, in those embodiments where the attachment location of the rail holder 35 on the roof support beam 2 needs to be pre-defined, or even locked in the length-direction of the roof support beam, some type of lengthwise locking structure may be required. For example, the foot 9 may be provided with a protrusion 99 or the like that is configured to be engageable in a corresponding hole or recess 100 in the top and/or bottom chord 59, 60, for providing a desired position locking of the rail holder 35 in the length-direction of the roof support beam 2.

A further example embodiment is shows in figure 14, in which the top and/or bottom chord 59, 60 has a form that enables the two moveable locking pins 68 of the rail holder 35 to reliably engaged behind top and/or bottom chord 59, 60. In other words, the cross-section of the top and/or bottom chord 59, 60 is selected to provide an abutment surface, against which the two moveable locking pins 68 may exert a pressing force for clamping the foot 9 against the top and/or bottom chord 59, 60.

Figure 14 shows a cross-sectional view showing the foot 9 in engaged state with the top chord 59, which in this example embodiment has a D-shape with a rounded exterior surface 101 facing towards the first elongate rail structure 30 and with an at least partly essentially flat exterior surface 102 facing towards the interconnection elements 61 of the roof support beam 2. Thereby, the two moveable locking pins 68 of the rail holder 35 may reliably be engaged behind the top chord 59, without having to drill potentially weakening locking holes in the upper chord. Other forms and shapes of the top and/or bottom chord 59, 60 is of course possible.

As discussed above with reference to figures 13A-13B, the same issue with positioning and/or locking of the rail holder 35 in the length-direction of the roof support beam 2 applies also here. Hence, if a locking of the foot 9 in the length-wise direction is desired, the foot 9 may be provided with a protrusion 99 (not showed) or the like that is configured to be engageable in a corresponding hole or recess 100 (not showed) in the top and/or bottom chord 59, 60.

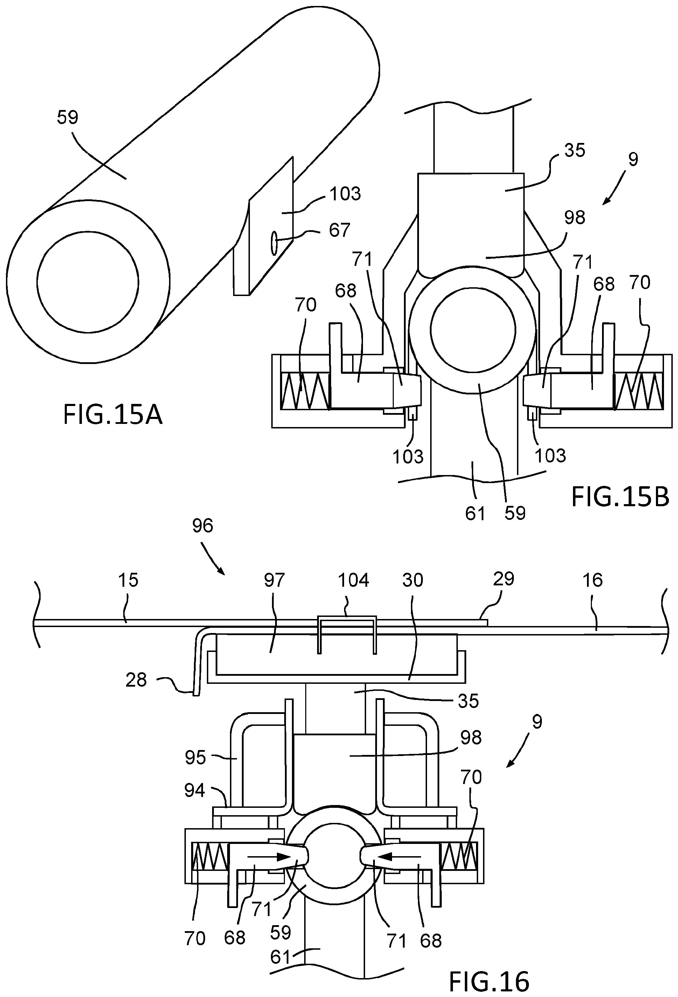

Still a further example attachment of two moveable locking pins 68 with the top or bottom chords 59, 60 is schematically illustrated in figures 15A-B, wherein figure 15A shows a perspective view of the top chord 59 and figure 15B shows a cross-sectional view showing the foot 9 in engaged state with the top chord 59.

In this example embodiment, the top chord 59 of the roof support beam 2 is provided with a dedicated locking pin receiving structure 103. The locking pin receiving structure 103 may for example be welded or otherwise secured to the roof support beam 2, and the locking pin receiving structure 103 may be arranged such that the two moveable locking pins 68 of the rail holder 35 may be engaged with the holes or recesses 67 of the locking pin receiving structure 103, for disconnectable attachment of the rail holder 35 to the roof support beam 2.

In the example embodiment of figures 15A-15B, the locking pin receiving structure 103 corresponds to two plates that are welded to the top chord 59 and provided with a locking hole 67. Other forms and shapes of the locking pin receiving structure 103 is of course possible.

The tarpaulin attachment interface 96 of the first elongated rail structure 30 is herein primarily disclosed in form of keder grooves 31-34. However, the benefits of providing the rail holder 35 with at least two moveable locking pins for disconnectable engagement with first roof support beam 2 is not restricted to a keder groove/chord roof connection. Consequently, with reference to figure 16, the tarpaulin attachment interface 96 of the first elongated rail structure 30 may in some example embodiments comprise an elongated nailing strip 97 that is fastened on top side of the first elongated rail structure 30, wherein the first tarpaulin 15 has a rectangular form with first and second opposite side edges, and wherein the first tarpaulin 15 is configured for being nailed to the nailing strip 97.

The elongated nailing strip 97 typically extends over the entire length of the first elongated rail structure 30 for providing good flexibility in terms of attachment position of the first and second tarpaulins 15, 16.

Specifically, two neighbouring tarpaulins, each covering a separate part of the roof in the roof length direction 26, may first be rolled out on the roof support structure 1, with their respective first and second side edges 28, 29 overlapping at the region of the elongated nailing strip 97. Thereafter, a roof builder may fasten the first and second tarpaulins 15, 16 to the elongated nailing strip 97, at a plurality of locations along the length of the first elongated rail structure 30, using an appropriate fastener 104, such as a nail or a staple.

Upon subsequent disassembly of the temporary protective roof system, the roof builder removes the plurality of fasteners 104 and removes the first and second tarpaulins 15, 16. Alternatively, in case the first and second tarpaulins 15, 16 are single-use items, the roof builder may for example simple tear off the first and second tarpaulins 15, 16 from the elongated nailing strip 97.

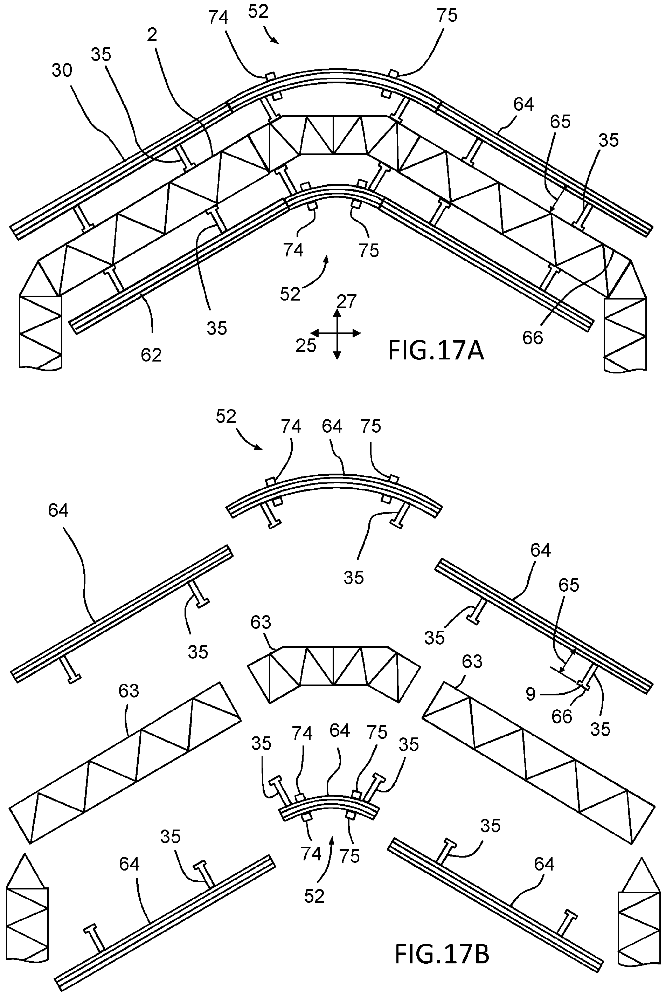

Figure 17A shows schematically a side view of an assembled first roof support beam 2 having a first elongated rail structure 30 temporarily fastened on an upper side of first roof support beam 2, as well as a second elongated rail structure 62 temporarily fastened on an under side of first roof support beam 2.

Figure 17B shows schematically a side view of an exploded view of the first roof support beam 2 of figure 17A. Figure 17B thus shows an example embodiment of the modular composition of the first roof support beam, the first elongated rail structure 30, and the second elongated rail structure 62.

In this example embodiment, the first and second elongated rail structures 30, 62 are of the keder type, i.e. includes keder grooves, but the modular design described here is not limited to the keder type tarpaulin attachment interface, and the tarpaulin attachment interface may instead be of the nailing strip type, or any other type.

The first and second elongated rail structures 30, 62 may have similar or identical design, i.e. similar or identical type and number of keder grooves, similar or identical type of rope guiding structure 52, such that the same type of tarpaulins may be selectively installed in the first or second elongated rail structures 30, 62.

This type of double installation of tarpaulins both above and below the first roof support beam 2 may be useful for improved heat insulation, or the like. Furthermore, the keder roof system may be built with only the second elongated rail structure 62, i.e. only the lower rail structure 62, if desired.

In other words, the first roof support beam 2 may be composed of a plurality of support beam elements 63 that may have various forms, such as straight element and curved elements, and the desired first roof support beam 2 may thus be built by assembling and mutually fastening an appropriate set of support beam elements 63.

Similarly, the first elongated rail structure 30 is composed of a plurality of elongated rail sections 64 that are connected end to end, in continuation with each other, to jointly form the first elongated rail structure 30. Likewise, the second elongated rail structure 62 is also composed of a plurality of elongated rail sections 64 that are connected end to end, in continuation with each other, to jointly form the second elongated rail structure 62.

In the example embodiment of figure 17B, each of the first and second elongated rail structures 30, 62 are composed of a curved elongated rail section 64 and a plurality of straight elongated rail sections 64.

The straight elongated rail sections 64 of the first and second elongated rail structures 30, 62 may be identical, such that the straight elongated rail sections 64 can be fastened to both on the upper and lower side of the first roof support beam 2.

The curved elongated rail sections 64 of the first and second elongated rail structures 30, 62 are different because the rail holders 35 for attaching the curved elongated rail sections 64 to the first roof support beam 2 are located on opposite sides.

Consequently, in some example embodiments, the first elongated rail structure 30 is composed of a plurality of elongated rail sections 64 connected end to end to jointly form the first elongated rail structure 30, and wherein at least one elongated rail section 64 of the first and/or second elongated rail structures 30, 62 comprises a rail holder 35, in particular two, three or four rail holders 35, for detachably fastening the elongated rail section 64 to a first roof support beam, in particular on a vertical upper or lower side of the first roof support beam 2.

The first elongated rail structure 30 is detachably fastened to the first roof support beam 2 by means of a plurality of individual rail holders 35 that are located spaced apart along the length of the first elongated rail structure 30.

With reference to figure 17A, the rail holders 35 have a foot 9 for detachable fastening the elongated rail section 64 on the first roof support beam 2, and a contact surface 66 of the foot 9, i.e. the surface of the foot that is in contact with and load-carrying relative to the first roof support beam, is located spaced apart from the first keder groove 31 with a distance 65 of at least 10 cm, specifically at least 25 cm, and more specifically within a range of 10 - 150 cm, specifically 15 - 50 cm, as measured in a direction opposite to the direction of elongation of the elongated rail section. This reduces the risk of damages and/or wear to the tarpaulins caused be interference with the roof support structure 1.

With reference to figures 3A-B, 4 and 17A-B, the rope guiding structure 52 of the first elongated rail structure 30 may in some example embodiments comprise at least one individual rope guiding member 74, 75 located on an elongated rail section 64 or along the first elongated rail structure 30, in particular two, three, four or five individual rope guiding members 74, 75 located longitudinally spaced apart on an elongated rail section 64 or along the first elongated rail structure 30.

With reference to figures 11A-C, 4 and 17A-B, the least one individual rope guiding member 74, 75 is located on the at least one curved elongated rail section 64, and wherein at least one, specifically all, straight elongated rail section 64 is free from said rope guiding structure 52.

With reference to figures 4 and 17A-B, the first elongated rail structure 30 comprises a plurality of individual rope guiding members 74, 75 located spaced apart on an outer side, in the height direction, of the first elongated rail structure 30, and the first elongated rail structure 30 comprises a plurality of individual rope guiding members 74, 75 located spaced apart on an inner side, in the height direction, of the first elongated rail structure.

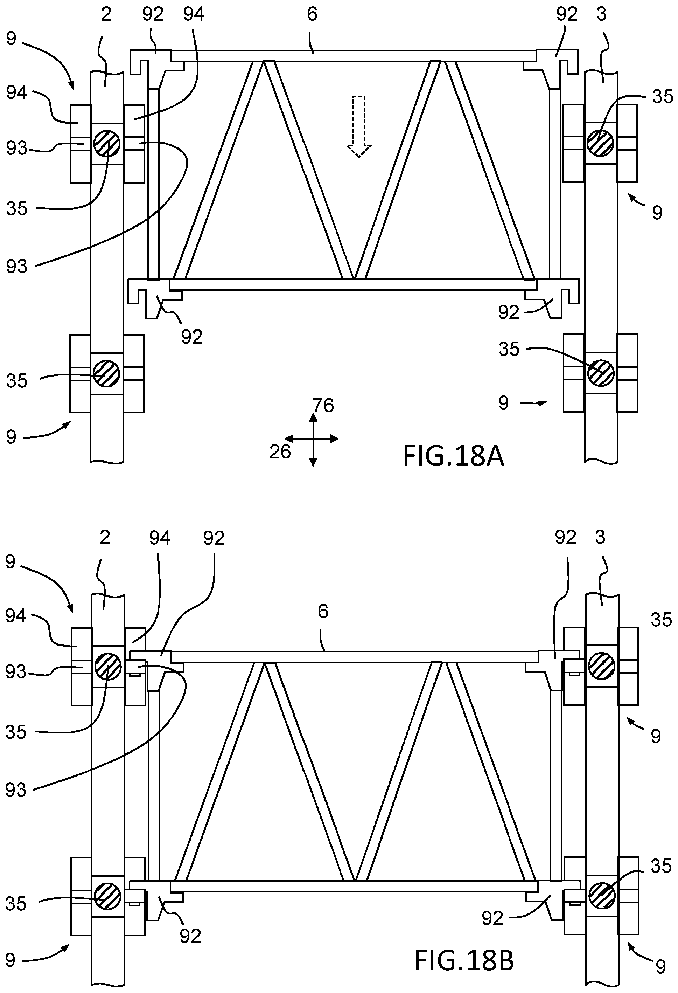

Figure 18A shows a top-view of first and second roof support beams 2, 3 in mounted state, and two rail holders 35 of a first elongated rail section 30 are mounted on each of the first and second roof support beams 2, 3. As described above with reference to figures 1A and 2, neighbouring roof support beams 2-5 are mutually structurally connected via brazing elements and/or ledgers 6 for defining a rigid framework the forms the roof support structure 1. According to some example embodiments, as illustrated in figure 18B and 1B, neighbouring roof support beams 2-5 may be mutually structurally connected by connecting said brazing elements and/or ledgers 6 to the rails holders 35 of the first and second elongated rail structures 30, 62. Figure 18A shows the brazing element 6 while being moved towards the rail holders 25, and figure 18B shows the brazing element 6 after complete connection with the rail holders 25.

By providing the rail holders 35, in particular the foot 9 of the rails holders 35, with a brazing element attachment interface 93 for connection with available quick-coupling brazing elements and/or ledgers 6, the roof support structure 1 is provided with increased options for quickly add further structural strength to the roof support structure, if needed, by simply installing some additional quick-coupling brazing elements and/or ledgers 6 between neighbouring first and second roof support beams 2, 3.

In the example of figure 18A, the brazing element and/or ledger 6 is provided in form of a quick-coupling lattice guard rail, which is a standard component of many scaffold manufacturing companies. The lattice guard rail 6 has four hook-shaped attachments 92 for connecting with the brazing element attachment interface 93 of four individual rails holders 35. As a result, the lattice guard rail 6 is arranged lying between the neighbouring first and second roof support beams 2, 3, as shown also in figure 1A.

The brazing element attachment interface 93 of each foot 9 may be provided in form a bracket 95 provided on each side of the foot 9 for enabling attachment of a lattice guard rail 6 to neighbouring roof support beams on both sides. Furthermore, the brazing element attachment interface 93 of each foot 9 may be provided with a flat support surface 94 on each side of the foot 9 for engagement with the four hook-shaped attachments 92, thereby providing further improved stability of the finished roof support structure 1. The bracket 95 and flat support surface 94 of the foot 9 is also shows in figure 2 and 10B.

The rail holder 35 may in some example embodiments be made of a separate foot 9 that is detachably connected to a separate elongated beam to form the rail holder 35. This design enabling use of the foot alone as a coupling member for connecting brazing elements or scaffold parts to the roof support beam, by means of the attachment interface 93 of the foot 9.

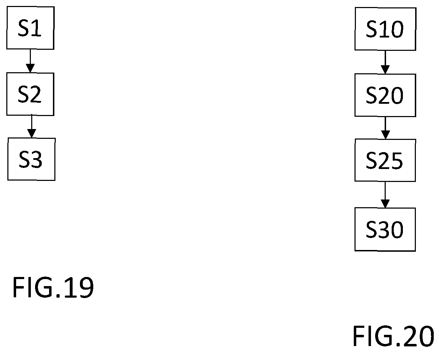

With reference to figure 19, the present disclosure also describes a method for assembling a temporary protective roof system. The method comprises a first step S1 of providing a first roof support beam 2 and providing a first elongated rail structure 30 having a tarpaulin attachment interface 96 and a rail holder 35. The method further comprises a second step S2 of detachably fastening the first elongated rail structure 30 to the first roof support beam 2 by engagement of at least two moveable locking pins 68 of the rail holder 35 with the first roof support beam 2. Thereafter, the method includes a third step of assembling a first tarpaulin 15 on the first elongated rail structures 30 by attaching the first tarpaulin 15 to the tarpaulin attachment interface 96 of the first elongated rail structure 30.

Specifically, when the tarpaulin attachment interface 96 corresponds to a first keder groove 31, the third step of assembling a first tarpaulin 15 on the first elongated rail structures 30 involves installing a first keder chord 38 of the first tarpaulin in the first keder groove 31 of the first elongated rail structure 30.

With reference to figure 20, the present disclosure also describes a more detailed example embodiment of the method for assembling a keder roof system. According to this more detailed example embodiment, the method of assembling a temporary protective roof system comprises a first step S10 of providing first and second roof support beams 2, 3, and providing first and second elongated rail structures 30, 62, each having a tarpaulin attachment interface 96 and a rail holder 35.

The method comprises a second step S20 of detachably fastening the first elongated rail structure 30 to the first roof support beam 2 by engagement of at least two moveable locking pins 68 of the rail holder 35 with the first roof support beam 2, and detachably fastening the second elongated rail structure 62 to the second roof support beam 3 by engagement of at least two moveable locking pins 68 of the rail holder 35 with the second roof support beam 2.

The method comprises a third step S25 of arranging the first and second roof support beams 2, 3 spaced apart side by side and interconnecting the first and second roof support beams 2, 3 and/or first and second elongated rail structures 30, 62 using brazing elements and/or ledgers 6 for defining a rigid roof bay.

Finally, the method comprises the fourth step S30 of assembling a first tarpaulin 15 on the first and second elongated rail structures 30 by attaching the first tarpaulin 15 to the tarpaulin attachment interface 96 of each of the first and second elongated rail structures 30, 62.

Specifically, when the tarpaulin attachment interface 96 of the rail holder 35 of each of the first and second roof support beams 2, 3 corresponds to a first keder groove 31, the fourth step of assembling a first tarpaulin 15 on the first and second elongated rail structures 30 involves installing a first keder chord 38 of the first tarpaulin in the first keder groove 31 of the first elongated rail structure 30, and installing second keder chord 39 of the first tarpaulin in the first keder groove 31 of the second elongated rail structure 62.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. For example, the pull ropes may be fastened to the tarpaulins in various other ways, such as by means of a eyelets or pull bar located in a pocket. The shuttle arrangements of the tarpaulins may thus be omitted, as well as the rope guiding structure on the elongated rail structures.

Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the scope of the appended claims. Reference signs mentioned in the claims should not be seen as limiting the extent of the matter protected by the claims, and their sole function is to make claims easier to understand.

The term "tarpaulin" used herein, also known as tarp, refers to a sheet fabric, such as for example a heavy-duty waterproof or non-waterproof cloth or tarp or similar type of piece of sheet material suitable for being used for protecting or covering of exposed objects or areas. The tarpaulin may be made of plastic material, such as fibre-reinforced polymeric material, such as PVC, polyethylene, polyester, etc. Alternatively, the tarpaulin may be made of natural material, such as canvas, cotton, or the like.

### REFERENCE SIGNS

- 1: Roof support structure
- 2: First roof support beam
- 3: Second roof support beam
- 4: Third roof support beam
- 5: Fourth roof support beam
- 6: Brazing element
- 7: Roof free span width
- 8: Roof height
- 9: Rail holder foot
- 10: First roof bay region
- 11: Second roof bay region
- 12: Third roof bay region
- 13: Roof ridge region
- 14: Pull rope
- 15: First tarpaulin
- 16: Second tarpaulin
- 17: Third tarpaulin
- 18: First eave region
- 19: Second eave region
- 20: Intermediate region
- 21: Interior part
- 22: Load carrying portion
- 23: First roof builder
- 24: Second roof builder
- 25: Roof width direction
- 26: Roof length direction
- 27: Roof height direction
- 28: First side edge of tarpaulin
- 29: Second side edge of tarpaulin
- 30: First elongated rail structure
- 31: First keder groove
- 32: Second keder groove
- 33: Third keder groove
- 34: Fourth keder groove
- 35: Rail holder
- 36: Third side edge of tarpaulin
- 37: Fourth side edge of tarpaulin
- 38: First keder chord
- 39: Second keder chord
- 40: First shuttle arrangement
- 41: Second shuttle arrangement
- 42: Third shuttle arrangement
- 43: Fourth shuttle arrangement
- 44: First end of beam
- 45: Rail attachment interface
- 46: Second end of beam
- 47: Support surface
- 48: First corner region
- 49: Second corner region
- 50: Third corner region
- 51: Fourth corner region
- 52: Rope guiding structure
- 53: First rope guiding portion
- 54: Second rope guiding portion
- 55: Third rope guiding portion
- 56: Fourth rope guiding portion
- 57: Fourth tarpaulin
- 58: Further tarpaulin
- 59: Top chord
- 60: Bottom chord
- 61: Interconnecting element
- 62: Second elongated rail structure
- 63: Roof support beam element
- 64: Elongated rail section
- 65: Distance
- 66: Contact surface of foot
- 67: Locking hole or recess
- 68: Locking pin
- 69: Control arm
- 70: Mechanical spring
- 71: Conical front end
- 72: Foot housing
- 73: Foot motion arrow
- 74: Rope guiding member
- 75: Rope guiding member
- 76: First rigid side portion
- 77: Second rigid side portion
- 78: U-shaped portion of foot
- 79: Distance between sides
- 80: Outer surface of top chord
- 81: Tapered front region
- 82: Length of conical portion
- 83: Total length of pin
- 84: Cylindrical portion of locking pin
- 92: Hook attachment
- 93: Brazing element attachment interface
- 94: Flat support surface
- 95: Bracket
- 96: Tarpaulin attachment interface
- 97: Elongated nailing strip
- 98: Load carrying portion
- 99: Protrusion
- 100: Hole
- 101: Rounded exterior surface
- 102: Flat exterior surface
- 103: Locking pin receiving structure
- 104: Fastener

## Claims

1. A temporary protective roof system comprising:
a first roof support beam (2) configured for providing main support and strength to a roof,
a first tarpaulin (15),
a first elongated rail structure (30) having a tarpaulin attachment interface (96) for attachment of the first tarpaulin (15) to the first elongated rail structure (30), and a rail holder (35) for detachably fastening the first elongated rail structure (30) to the first roof support beam (2),
**characterised in that**
the rail holder (35) of the first elongated rail structure (30) comprises at least two moveable locking pins (68) for disconnectable engagement with the first roof support beam (2).

2. The temporary protective roof system according to any of the preceding claims, wherein the at least two moveable locking pins (68) of the rail holder (35) are arranged for disconnectable engagement with corresponding holes or recess (67) in the first roof support beam (2).

3. The temporary protective roof system according any of the preceding claims, wherein the at least two moveable locking pins (68) are moveable between an engaged position, in which the locking pins are engaged with the first roof support beam (2) for securing the rail holder to the first roof support beam (2), and a disengaged position, in which the locking pins are not engaged with the first roof support beam, and the rail holder is removable from the first roof support beam (2).

4. The temporary protective roof system according to any of the preceding claims, wherein the at least two moveable locking pins (68) are spring-loaded towards the engaged position.

5. The temporary protective roof system according to any of the preceding claims, wherein the at least two moveable locking pins (68) are configured for engaging opposite sides of the first roof support beam (2).

6. The temporary protective roof system according to any of the preceding claims, wherein at least one moveable locking pin (68), specifically each of at least two moveable locking pins (68), is coupled to a common or separate control arm (69) for enabling motion control of the moveable locking pin between the engaged position and disengaged position by manually operating said control arm (69).

7. The temporary protective roof system according to claim 6, wherein at least one moveable locking pin (68), specifically each of at least two moveable locking pins (68), can be selectively set and/or locked in the engaged position and disengaged position, by manually turning the control arm (69).

8. The temporary protective roof system according to any of the preceding claims, wherein the rail holder (35) and the first roof support beam (2) are configured for providing automatic attachment of the rail holder (35) to the first roof support beam (2) when the rail holder (35) is pushed towards the first roof support beam (2).

9. The temporary protective roof system according to any of the preceding claims, wherein at least a front region of said at least two locking pins (68) has a conical or tapered shape over a portion of a total length of the locking pin, such that a conical or tapered front region of the locking pins (68) is configured to interact with the first roof support beam (2) in engaged position of the moveable locking pins (68).

10. The temporary protective roof system according to any of the preceding claims, wherein the rail holder (35) has a foot (9) that is configured for being in contact with the first roof support beam (2), and wherein the at least two moveable locking pins (68) are located in said foot (9).

11. The temporary protective roof system according to claim 10, wherein a contact surface of the first roof support beam (2) configured to receive the foot of the rail holder (35) is rounded or inclined, such that the locking pins (68) are configured to be automatically pushed back against the force of a spring device when the foot is pushed towards the first roof support beam (2) and the locking pins (68) start engaging an exterior surface of the first roof support beam (2), and such that the locking pins (68) are configured to automatically move forwards towards the first roof support beam (2) when the foot with the locking pins (68) reaches the final position.

12. The temporary protective roof system according to any of the preceding claims 10 to 11, wherein the rail holder (35) with the at least two spring-loaded locking pins (68) is arranged with snap-fit functionality.

13. The temporary protective roof system according to any of the preceding claims 10 to 12, wherein the rail holder (35) comprises an elongated beam having first and second ends (44, 46), wherein the first end (44) of the beam is provided with a rail attachment interface (45) configured for enabling rigid connection with the first elongated rail structure (30), and wherein the second end (46) of the beam is provided with the foot (9) for enabling detachable connection with the first roof support beam (2).

14. The temporary protective roof system according to any of the preceding claims 10 to 13, wherein the foot (9) comprises a brazing element attachment interface (93) on each side of the foot (9) for enabling attachment of a structural brazing element (6) to the foot.

15. A method for assembling a temporary protective roof system comprising:
providing a first roof support beam (2), and providing a first elongated rail structure (30) having a tarpaulin attachment interface and a rail holder (35),
detachably fastening the first elongated rail structure (30) to the first roof support beam (2) by engagement of at least two moveable locking pins (68) of the rail holder (35) with the first roof support beam (2),
assembling a first tarpaulin (15) on the first elongated rail structure (30) by attaching the first tarpaulin (15) to the tarpaulin attachment interface of the first elongated rail structure (30).

## Patentansprüche

1. Temporäres Schutzdachsystem, umfassend:
einen ersten Dachstützbalken (2), der zum Bereitstellen von primärer Abstützung und Festigkeit für ein Dach konfiguriert ist,
eine erste Plane (15),
eine erste längliche Schienenstruktur (30), die eine Planenbefestigungsschnittstelle (96) zur Befestigung der ersten Plane (15) an der ersten länglichen Schienenstruktur (30) und einen Schienenhalter (35) zum lösbaren Befestigen der ersten länglichen Schienenstruktur (30) an dem ersten Dachstützbalken (2) aufweist,
**dadurch gekennzeichnet, dass**
der Schienenhalter (35) der ersten länglichen Schienenstruktur (30) mindestens zwei bewegbare Verriegelungsstifte (68) zum trennbaren Eingriff mit dem ersten Dachstützbalken (2) umfasst.

2. Temporäres Schutzdachsystem nach einem der vorhergehenden Ansprüche, wobei die mindestens zwei bewegbaren Verriegelungsstifte (68) des Schienenhalters (35) zum trennbaren Eingriff mit entsprechenden Löchern oder einer Vertiefung (67) in dem ersten Dachstützbalken (2) angeordnet sind.

3. Temporäres Schutzdachsystem nach einem der vorhergehenden Ansprüche, wobei die mindestens zwei bewegbaren Verriegelungsstifte (68) zwischen einer in Eingriff stehenden Position, in der die Verriegelungsstifte zum Sichern des Schienenhalters an dem ersten Dachstützbalken (2) mit dem ersten Dachstützbalken (2) in Eingriff stehen, und einer nicht in Eingriff stehenden Position, in der die Verriegelungsstifte nicht mit dem ersten Dachstützbalken in Eingriff stehen, bewegbar sind und der Schienenhalter aus dem ersten Dachstützbalken (2) entfernbar ist.

4. Temporäres Schutzdachsystem nach einem der vorhergehenden Ansprüche, wobei die mindestens zwei bewegbaren Verriegelungsstifte (68) zu der in Eingriff stehenden Position federbelastet sind.

5. Temporäres Schutzdachsystem nach einem der vorhergehenden Ansprüche, wobei die mindestens zwei bewegbaren Verriegelungsstifte (68) zum Eingreifen in gegenüberliegende Seiten des ersten Dachstützbalkens (2) konfiguriert sind.

6. Temporäres Schutzdachsystem nach einem der vorhergehenden Ansprüche, wobei mindestens ein bewegbarer Verriegelungsstift (68), insbesondere jeder der mindestens zwei bewegbaren Verriegelungsstifte (68), mit einem gemeinsamen oder separaten Steuerungsarm (69) zum Ermöglichen einer Bewegungssteuerung des bewegbaren Verriegelungsstifts zwischen der in Eingriff stehenden Position und der nicht in Eingriff stehenden Position durch manuelles Betätigen des Steuerungsarms (69) gekoppelt ist.

7. Temporäres Schutzdachsystem nach Anspruch 6, wobei mindestens ein bewegbarer Verriegelungsstift (68), insbesondere jeder der mindestens zwei bewegbaren Verriegelungsstifte (68), durch manuelles Drehen des Steuerungsarms (69) selektiv in die in Eingriff stehende Position und die nicht in Eingriff stehende Position eingestellt und/oder in dieser verriegelt werden kann.

8. Temporäres Schutzdachsystem nach einem der vorhergehenden Ansprüche, wobei der Schienenhalter (35) und der erste Dachstützbalken (2) zum Bereitstellen einer automatischen Befestigung des Schienenhalters (35) an dem ersten Dachstützbalken (2) konfiguriert sind, wenn der Schienenhalter (35) zu dem ersten Dachstützbalken (2) geschoben wird.

9. Temporäres Schutzdachsystem nach einem der vorhergehenden Ansprüche, wobei mindestens ein vorderer Bereich der mindestens zwei Verriegelungsstifte (68) eine konische oder sich verjüngende Form über einen Abschnitt einer Gesamtlänge des Verriegelungsstifts aufweist, so dass ein konischer oder sich verjüngender vorderer Bereich der zwei Verriegelungsstifte (68) dazu konfiguriert ist, in der in Eingriff stehenden Position der bewegbaren Verriegelungsstifte (68) mit dem ersten Dachstützbalken (2) zu interagieren.

10. Temporäres Schutzdachsystem nach einem der vorhergehenden Ansprüche, wobei der Schienenhalter (35) einen Fuß (9) aufweist, der zum in Kontakt stehen mit dem ersten Dachstützbalken (2) konfiguriert ist, und wobei die mindestens zwei bewegbaren Verriegelungsstifte (68) sich in diesem Fuß (9) befinden.

11. Temporäres Schutzdachsystem nach Anspruch 10, wobei eine Kontaktoberfläche des ersten Dachstützbalkens (2), die dazu konfiguriert ist, den Fuß des Schienenhalters (35) aufzunehmen, abgerundet oder geneigt ist, so dass die Verriegelungsstifte (68) dazu konfiguriert sind, automatisch gegen die Kraft einer Federvorrichtung zurückgeschoben zu werden, wenn der Fuß zu dem ersten Dachstützbalken (2) hin geschoben wird und die Verriegelungsstifte (68) beginnen, in eine äußere Oberfläche des ersten Dachstützbalkens (2) einzugreifen, und so dass die Verriegelungsstifte (68) dazu konfiguriert sind, sich automatisch zu dem ersten Dachstützbalken (2) vorwärts zu bewegen, wenn der Fuß mit den Verriegelungsstiften (68) die Endposition erreicht.

12. Temporäres Schutzdachsystem nach einem der vorhergehenden Ansprüche 10 bis 11, wobei der Schienenhalter (35) mit den mindestens zwei federbelasteten Verriegelungsstiften (68) mit einer Schnappfunktionalität angeordnet ist.

13. Temporäres Schutzdachsystem nach einem der vorhergehenden Ansprüche 10 bis 12, wobei der Schienenhalter (35) einen länglichen Balken umfasst, der ein erstes und ein zweites Ende (44, 46) aufweist, wobei das erste Ende (44) des Balkens mit einer Schienenbefestigungsschnittstelle (45) versehen ist, die zum Ermöglichen einer starren Verbindung mit der ersten länglichen Schienenstruktur (30) konfiguriert ist, und wobei das zweite Ende (46) des Balkens mit dem Fuß (9) versehen ist, zum Ermöglichen einer lösbaren Verbindung mit dem ersten Dachstützbalken (2).

14. Temporäres Schutzdachsystem nach einem der vorhergehenden Ansprüche 10 bis 13, wobei der Fuß (9) eine Hartlötelement-Befestigungsschnittstelle (93) auf jeder Seite des Fußes (9) zum Ermöglichen einer Befestigung eines strukturellen Hartlötelements (6) an dem Fuß umfasst.

15. Verfahren zum Zusammensetzen eines temporären Schutzdachsystems, umfassend:
Bereitstellen eines ersten Dachstützbalkens (2) und Bereitstellen einer ersten länglichen Schienenstruktur (30), die eine Planenbefestigungsschnittstelle und einen Schienenhalter (35) aufweist,
lösbares Befestigen der ersten länglichen Schienenstruktur (30) an dem ersten Dachstützbalken (2) durch Eingriff von mindestens zwei bewegbaren Verriegelungsstiften (68) des Schienenhalters (35) mit dem ersten Dachstützbalken (2),
Zusammensetzen einer ersten Plane (15) auf der ersten länglichen Schienenstruktur (30) durch Befestigen der ersten Plane (15) an der Planenbefestigungsschnittstelle der ersten länglichen Schienenstruktur (30).

## Revendications

1. Système de toit de protection temporaire comprenant :
une première poutre de support de toit (2) configurée pour fournir un support principal et une résistance à un toit,
une première bâche (15),
une première structure de rail allongée (30) ayant une interface de fixation de bâche (96) pour la fixation de la première bâche (15) à la première structure de rail allongée (30), et un support de rail (35) pour fixer de manière détachable la première structure de rail allongée (30) à la première poutre de support de toit (2),
**caractérisé en ce que**
le support de rail (35) de la première structure de rail allongée (30) comprend au moins deux broches de verrouillage mobiles (68) pour un engagement déconnectable avec la première poutre de support de toit (2).

2. Système de toit de protection temporaire selon l'une quelconque des revendications précédentes, dans lequel les au moins deux broches de verrouillage mobiles (68) du support de rail (35) sont agencées pour un engagement déconnectable avec des trous ou un renfoncement correspondants (67) dans la première poutre de support de toit (2).

3. Système de toit de protection temporaire selon l'une quelconque des revendications précédentes, dans lequel les au moins deux broches de verrouillage mobiles (68) sont mobiles entre une position engagée, dans laquelle les broches de verrouillage sont engagées avec la première poutre de support de toit (2) pour fixer le support de rail à la première poutre de support de toit (2), et une position désengagée, dans laquelle les broches de verrouillage ne sont pas engagées avec la première poutre de support de toit, et le support de rail est amovible de la première poutre de support de toit (2).

4. Système de toit de protection temporaire selon l'une quelconque des revendications précédentes, dans lequel les au moins deux broches de verrouillage mobiles (68) sont chargées par ressort vers la position engagée.

5. Système de toit de protection temporaire selon l'une quelconque des revendications précédentes, dans lequel les au moins deux broches de verrouillage mobiles (68) sont configurées pour s'engager avec les côtés opposés de la première poutre de support de toit (2).

6. Système de toit de protection temporaire selon l'une quelconque des revendications précédentes, dans lequel au moins une broche de verrouillage mobile (68), spécifiquement chacune d'au moins deux broches de verrouillage mobiles (68), est couplée à un bras de commande (69) commun ou séparé pour permettre la commande de mouvement de la broche de verrouillage mobile entre la position engagée et la position désengagée en actionnant manuellement ledit bras de commande (69).

7. Système de toit de protection temporaire selon la revendication 6, dans lequel au moins une broche de verrouillage mobile (68), en particulier chacune d'au moins deux broches de verrouillage mobiles (68), peut être réglée et/ou verrouillée de manière sélective dans la position engagée et la position désengagée, en tournant manuellement le bras de commande (69).

8. Système de toit de protection temporaire selon l'une quelconque des revendications précédentes, dans lequel le support de rail (35) et la première poutre de support de toit (2) sont configurés pour fournir une fixation automatique du support de rail (35) à la première poutre de support de toit (2) lorsque le support de rail (35) est poussé vers la première poutre de support de toit (2).

9. Système de toit de protection temporaire selon l'une quelconque des revendications précédentes, dans lequel au moins une région avant desdites au moins deux broches de verrouillage (68) a une forme conique ou effilée sur une partie d'une longueur totale de la broche de verrouillage, de telle sorte qu'une région avant conique ou effilée des broches de verrouillage (68) est configurée pour interagir avec la première poutre de support de toit (2) dans la position engagée des broches de verrouillage mobiles (68).

10. Système de toit de protection temporaire selon l'une quelconque des revendications précédentes, dans lequel le support de rail (35) comporte un pied (9) qui est configuré pour être en contact avec la première poutre de support de toit (2), et dans lequel les au moins deux broches de verrouillage mobiles (68) sont situées dans ledit pied (9).

11. Système de toit de protection temporaire selon la revendication 10, dans lequel une surface de contact de la première poutre de support de toit (2) configurée pour recevoir le pied du support de rail (35) est arrondie ou inclinée, de telle sorte que les broches de verrouillage (68) sont configurées pour être automatiquement repoussées contre la force d'un dispositif à ressort lorsque le pied est poussé vers la première poutre de support de toit (2) et les broches de verrouillage (68) commencent à s'engager avec une surface extérieure de la première poutre de support de toit (2), et de telle sorte que les broches de verrouillage (68) sont configurées pour se déplacer automatiquement vers l'avant vers la première poutre de support de toit (2) lorsque le pied avec les broches de verrouillage (68) atteint la position finale.

12. Système de toit de protection temporaire selon l'une quelconque des revendications précédentes 10 à 11, dans lequel le support de rail (35) avec les au moins deux broches de verrouillage à ressort (68) est agencé avec une fonctionnalité d'encliquetage.

13. Système de toit de protection temporaire selon l'une quelconque des revendications précédentes 10 à 12, dans lequel le support de rail (35) comprend une poutre allongée ayant des première et seconde extrémités (44, 46), dans lequel la première extrémité (44) de la poutre est pourvue d'une interface de fixation de rail (45) configurée pour permettre une connexion rigide avec la première structure de rail allongée (30), et dans lequel la seconde extrémité (46) de la poutre est pourvue du pied (9) pour permettre une connexion détachable avec la première poutre de support de toit (2).

14. Système de toit de protection temporaire selon l'une quelconque des revendications précédentes 10 à 13, dans lequel le pied (9) comprend une interface de fixation d'élément de brasage (93) de chaque côté du pied (9) pour permettre la fixation d'un élément de brasage structurel (6) au pied.

15. Procédé d'assemblage d'un système de toit de protection temporaire comprenant :
la fourniture d'une première poutre de support de toit (2), et la fourniture d'une première structure de rail allongée (30) ayant une interface de fixation de bâche et un support de rail (35),
la fixation amovible de la première structure de rail allongée (30) à la première poutre de support de toit (2) par engagement d'au moins deux broches de verrouillage mobiles (68) du support de rail (35) avec la première poutre de support de toit (2),
l'assemblage d'une première bâche (15) sur la première structure de rail allongée (30) en fixant la première bâche (15) à l'interface de fixation de bâche de la première structure de rail allongée (30).
